# EUROPEAN PATENT SPECIFICATION

(11) **EP 3 473 439 B1**
(45) Date of publication and mention of the grant of the patent: **26.01.2022**
(21) Application number: 18201261.7
(22) Date of filing: 18.10.2018
(51) Int. Cl.: B32B 37/14, B32B 38/08, B29C 43/22, B29C 51/12, B29C 59/00, E04D 3/28

(54) **MANUFACTURING PROCESS FOR MANUFACTURING A REINFORCED PANEL SUITABLE TO FORM A COVERING IN A BUILDING**
HERSTELLUNGSVERFAHREN ZUR HERSTELLUNG EINER VERSTÄRKTEN PLATTE ZUR FORMUNG EINER ABDECKUNG IN EINEM GEBÄUDE
PROCÉDÉ DE FABRICATION D'UN PANNEAU RENFORCÉ ADAPTÉ POUR FORMER UN REVÊTEMENT DANS UN BÂTIMENT

(30) Priority: 18.10.2017 IT 201700117950
(43) Date of publication of application: 24.04.2019
(73) Proprietor: DOTT. GALLINA S.r.l., 10129 Torino (IT)
(72) Inventor: GALLINA David, 10129 Torino (IT)
(74) Representative: Lovino, Paolo

(56) References cited:
- WO-A1-98/32607
- WO-A1-2013/026822
- WO-A1-2014/136046
- WO-A2-2007/011561
- FR-A1- 2 704 477
- US-A- 3 246 058
- US-A1- 2016 123 015

## Description

### CROSS-REFERENCE TO RELATED APPLICATIONS

This patent application claims priority from Italian patent application no. 102017000117950 filed on 18/10/2017.

### TECHNICAL FIELD

The present invention relates to a manufacturing process for manufacturing a reinforced panel suitable to form a covering in a building, in particular for roofs, canopies and skylights.

### BACKGROUND ART

In the field of building construction, for manufacturing roofs, canopies and skylights it is commonly known to use panels of transparent or semi-transparent polymer material, e.g. polycarbonate, which are arranged side by side or in alternated positions with panels made of other material (metal sheets, fibre cement, etc...) so as to form a continuous covering which, in general, allows the sunlight from the external environment to enter the building.

In particular, these panels have, in cross section, a corrugated or wavy profile, i.e. have a series of portions shaped with a wavy profile or with an omega-shaped profile acting as stiffening, reference and coupling elements. In particular, during the assembly and the installation of the covering, such shaped portions are superimposed on corresponding portions, having the same shape, of an adjacent panel and help to keep said panels in mutually fixed positions.

According to safety regulations, beneath the covering it must be provided a so-called "anti-fall net", namely a protection that in any case allows the passage of light but prevents the fall from the external environment of material or of maintenance personnel working on the covering in case of failure or breakage of the panels.

The known solutions of the type just described are widely used, but they have some drawbacks related to the presence of the anti-fall net. In fact, this net causes a relatively high overall height in the building below the covering and tends to alter the aesthetic value of the covering, especially when viewed from inside the building. Furthermore, the installation of the anti-fall net requires significant times, which are added to those necessary for the assembly of the covering.

At least part of these drawbacks are solved by the solution shown in WO2007011561A2. This solution consists of a transparent panel in polymer material and a perforated metal reinforcement, which is grafted or nested in a corresponding seat at a lower surface of the transparent panel. The reinforced panel laterally ends with two slightly folded fins, which are connected by rivets to wavy elements having a reference and coupling function.

It is felt the need to perfect this last solution to simplify the manufacturing processes and/or reinforce also the wavy parts. WO98/32607A1 corresponds to the preamble of claim 1 and discloses a shaped plate having at least three layers: one intermediate structural layer and two outer layers, respectively upper and lower. The intermediate structural layer is highly resistant both mechanically and chemically, e.g. it is loaded with filling and/or reinforcing materials. Each layer can be obtained by means of extrusion, using a two-stage coextruder.

### DISCLOSURE OF INVENTION

The object of the present invention is to provide a manufacturing process for manufacturing a reinforced panel suitable to form a covering in a building, which allows the abovementioned need to be simply and inexpensively satisfied.

According to the present invention, it is provided a manufacturing process for manufacturing a reinforced panel as defined in claim 1.

### BRIEF DESCRIPTION OF THE DRAWINGS

The invention will now be described with reference to the accompanying drawings showing an example of a non-limiting embodiment, in which:
- Figure 1 is a diagram relating to a preferred embodiment of the manufacturing process for manufacturing a reinforced panel according to the present invention;
- Figure 2 is a perspective view of a reinforced panel manufactured according to the dictates of the present invention;

- Figure 3 is similar to Figure 2 and shows a variant of the reinforced panel of Figure 2;
- Figures 4 and 5 show, in cross section and on an enlarged scale, a detail of Figures 2 and 3, respectively;
- Figure 6 shows in part and in perspective a reinforcing element of the reinforced panel of Figures 2 to 5; and
- Figures 7 and 8 are similar to Figures 4 and 5 and show further variants of the reinforced panel.

### BEST MODE FOR CARRYING OUT THE INVENTION

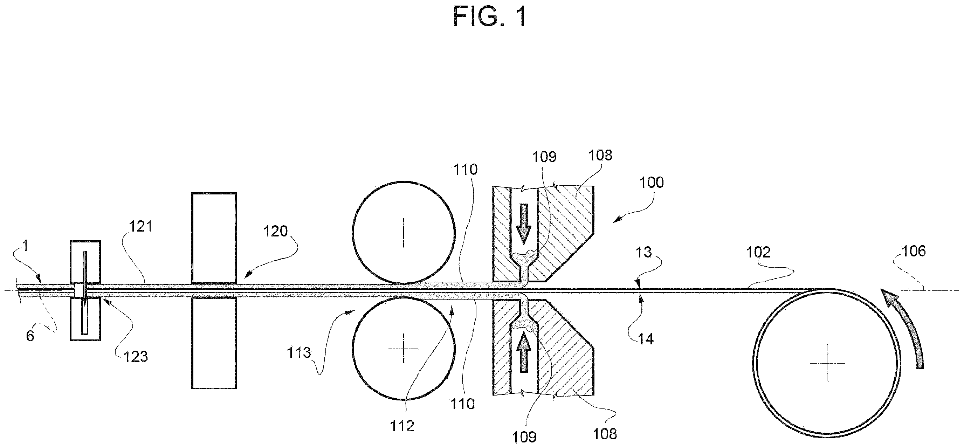

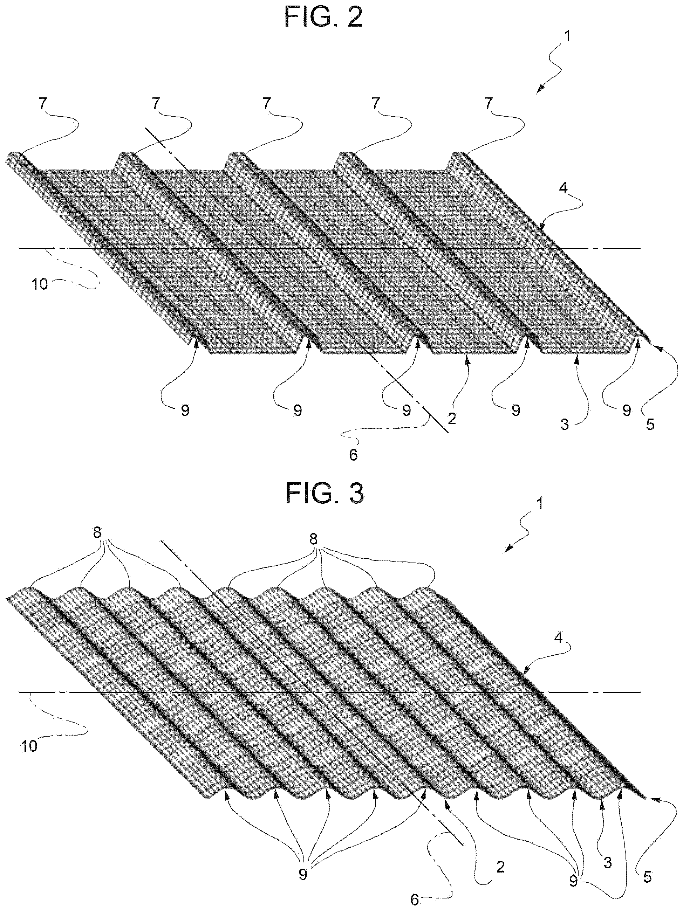

In Figures 1 and 2, the reference number 1 indicates a reinforced panel that, in use, forms part of a covering in a building (not shown), in particular a roof, a canopy or a skylight.

As shown in Figure 2, the panel 1 comprises a sheet 2 produced by extrusion in a polymer material, preferably polycarbonate (PC). As an example, as an alternative, the sheet 2 can be made of polymethyl methacrylate (PMMA). However, other polymers can be used. According to alternatives not described in detail, the sheet 2 can be made by extruding two or more different compatible polymers and/or two or more polymers having different colours.

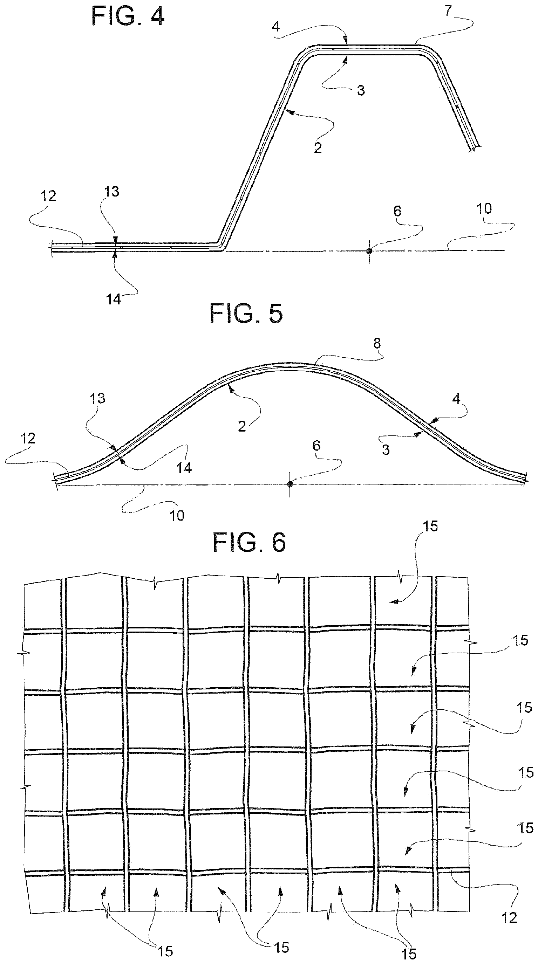

The sheet 2 is defined by a lower face 3, an upper face 4 and a side surface 5, which is transverse to the faces 3, 4 and extends along the peripheral edge of the faces 3, 4. As shown in Figures 4 and 5, with particular reference to the preferred examples of the present invention, the thickness of the sheet 2 measured between the faces 3 and 4 is constant.

The sheet 2 extends along a rectilinear axis 6, parallel to the faces 3 and 4. The sheet 2 has a cross section (obtained with section planes orthogonal to the axis 6) having even shape and size along the axis 6.

The profile of the sheet 2, seen along the axis 6, i.e. in the aforesaid transverse section, comprises at least one corrugated or omega-shaped portion, indicated by the reference number 7 in Figures 2 and 4, and/or at least a wavy portion 8, as in Figures 3 and 5. Each of the portions 7 and 8 defines on faces 3 and 4 one or more channels 9, which are parallel to the axis 6 and are spaced apart along a direction 10.

The portions 7, 8 act as stiffening, reference and coupling elements. In particular, the portions 7, 8 may be superimposed to corresponding portions 7, 8 of an adjacent panel and then engage corresponding channels of such adjacent panel during the assembly and the installation of the aforementioned covering.

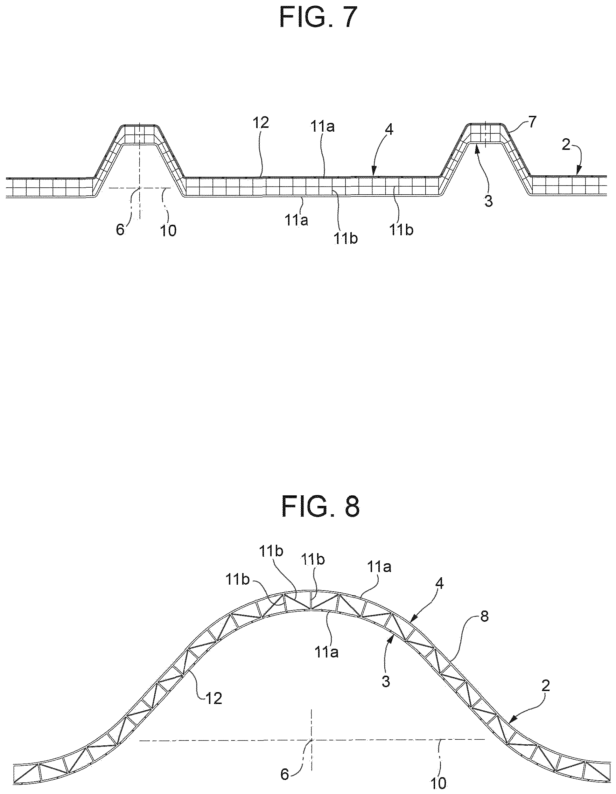

According to the variants shown in Figures 7 and 8, the sheet 2 is alveolar, namely it comprises two or more continuous walls 11a, which are parallel to each other, define the faces 3 and 4 and are joined together by a plurality of internal partitions 11b. The partitions 11b connect the walls 11a to each other and delimit a plurality of internal channels parallel to the axis 6, generally called "cells".

According to the preferred solutions shown in Figures 4 and 5, the sheet 2 is made of solid material, i.e. it is free of internal cavities, channels or cells.

Preferably, but not exclusively, the polymer material of the sheet 2 is light permeable, i.e. it is transparent or opal, of a coloured or non-coloured type, to allow external ambient light to enter the building through the panel 1. The average direction 10 along which the omega-shaped portions or the wavy portions are distributed and aligned in the shown examples is straight, so that the panel 1 lies or extends on a plane. Alternatively, the direction 10 is curved, whereby the panel 1 is substantially cylindrical or barrel-shaped. In particular, the presence of a possible curvature for the direction 10, the presence of any cells or channels inside the sheet 2, the specific geometry of the cross section of the sheet 2, the size, shape, number and positions of the channels 9, etc... are defined by the equipment used in the manufacturing process, described below.

With reference to Figures 4 and 5, the panel 1 further comprises at least one reinforcing element 12 delimited by an upper surface 13 and a lower surface 14, whose distance is relatively small. In other words, the reinforcing element has a height between the surfaces 13 and 14 that is smaller than the thickness of the sheet 2. In the case of the variants of Figures 7 and 8, the height of the reinforcing element 12 between the surfaces 13 and 14 is smaller than the thickness of one of the walls 11a.

As shown in Figure 6, the reinforcing element 12 has a plurality of openings 15, which are arranged side by side along the surfaces 13, 14 and transversely pass through the surfaces 13, 14, so that the reinforcing element 12 is light permeable.

The reinforcing element 12 is preferably made of a single piece, but may consist of several pieces fixed together.

As shown in the attached figures, the reinforcing element 12 is coupled to the sheet 2 in a fixed position and has the same profile as the sheet 2 in cross section (in section planes orthogonal to the axis 6) . In other words, the reinforcing element 12 follows the course of the portions 7, 8 to reinforce these latter without altering the shape and without compromising the function of the channels 9. In other words, the reinforcing element 12 is embedded in the polymer material of the sheet 2 to define an armature in the panel 1, also at the portions 7, 8. In particular, in the variants of Figures 6 and 7, the reinforcing element 12 is embedded inside one of the walls 11a.

According to variants not shown, the reinforcing element 12 is arranged at one of the faces 3, 4 so that it is only partially embedded in the polymer material of the sheet 2. Advantageously, the reinforcing element 12 extends over the whole width of the sheet 2, up to the side surface 5. According to variants not shown, the sheet 2 is free of the reinforcing element 12 in end regions having a relatively small width; and/or the panel 1 comprises two or more reinforcing elements 12 arranged side by side or overlapping each other.

The reinforcing element 12 is flexible or foldable to match the curvature of the sheet 2 at the portions 7, 8 during the manufacturing process of the panel 1.

Preferably, the reinforcing element 12 is a mesh element, where such meshes define the aforesaid openings 15 for the light passage. In particular, this mesh element is defined by a net.

The flexibility of this net is variable depending on the material and the cross section of the wires it is made of, and according to the mesh size of the net. Preferably, the net consists of metal wires, e.g. braided and/or electro-welded.

Alternatively, the net may consist of wires having a metal core and a coating of polymer material that covers the metal core; or of single-material wires, e.g. made of a technopolymer; or of wires comprising glass, carbon, kevlar or other reinforcing material. By way of example, the net can be defined by fencing material or by a so-called "plaster-bearing" net.

If the aforesaid mesh element is made of glass fibre threads, it is advisable to treat it superficially in order to apply an anti-alkaline coating before coupling the reinforcing element 12 to the polymer material forming the sheet 2 to improve the adhesion.

According to another variant not shown, the aforementioned mesh element is defined by a grid, e.g. a grid formed of metal foils, which is shaped during the manufacturing process of the panel 1 so as to have the same corrugated or wavy profile of the sheet 2.

According to another variant not shown, the reinforcing element 12 is defined by a perforated sheet, for example by a perforated metal sheet, which also is flexible enough to be shaped like the polymer material of the sheet 2 during the manufacturing process.

During this process, with reference to what is schematically shown in Figure 1, the reinforcing element 12 is fed to an extruder 100 together with the polymer material that will form the sheet 2. In other words, at least one extruded polymer material layer is deposited on the reinforcing element so as to embed at least part of the reinforcing element in the polymer material and obtain a stable attachment in a single operation. In particular, the reinforcing element is provided in the form of a continuous strip 102, which is preferably wound so as to form a reel and is progressively unwound. The reinforcing strip 102 is fed towards the extruder 100 in a flat (or substantially flat, due to its deformability) shape along a longitudinal axis 106 (coinciding with the axis 6).

Preferably, the extruder 100 comprises two dies 108 arranged on opposite sides of an ideal plane on which the advancing reinforcing strip 102 lies so as to extrude respective streams of molten polymer material 109 and form respective layers 110 of softened polymer material in the pasty state on the opposite surfaces 13, 14 of the reinforcing strip 102.

The polymer material of the layers 110, when deposited on the surfaces 13 and 14, is still fluid so that it automatically and completely fills the openings 15. It is thus formed a single layer of polymer material in which the reinforcing element 102 remains enclosed. While incorporating the reinforcing strip 102, the polymer material is permanently and directly fixed on the surfaces 13 and 14.

As shown in Figure 1, therefore, the extruder 100 forms a blank defined by a reinforced strip 112 having a flat cross section profile (orthogonal to the axis 106). The strip 112 advances along the axis 106 in a known and not shown manner to be preferably subjected to a calendering step in a calendering device 113 to define the thickness of the polymer material of the strip 112 and, therefore, the thickness of the panel 1 to be obtained, and also to consolidate the polymer material and increase the adhesion to the reinforcing strip 102.

After calendering, the strip 112 is deformed into a shaping device 120 (schematically shown) configured so as to obtain at least a portion 7 or at least a portion 8 starting from the flat shape of the strip 112, and then to obtain the channels 9. The device 120 therefore forms a shaped strip 121 having the same cross section as the panel 1 (considered on section planes orthogonal to the axis 106). Finally, to obtain the panel 1, the strip 121 is cut at the desired axial length by a cutting device 123 (schematically shown).

What previously described clearly shows that the panel 1 integrates the covering function in the building and the anti-fall function by fixing the reinforcing element 12 to the polymer material of the sheet 2 so as to obtain a single component. In particular, the panel 1 is sufficiently reinforced to comply with safety regulations even without having to provide an additional anti-fall net below, thus saving space and installation time. In particular, the reinforcing element 12 is integrated into the panel 1 with a stable coupling between the polymer material and the material of the reinforcing element 12, which therefore visually and constructively constitutes a whole with the sheet 2.

Moreover, thanks to the fact of embedding the reinforcing element 12 during the extrusion of the polymer material, the manufacture of the panel 1 is particularly simple and fast. In particular, this manufacture does not require specific equipment and additional assembly times for fixing the reinforcing element 12 to the sheet 2, as this fixing takes place directly during the extrusion step.

At the same time, the manufacturing process allows directly obtaining the shape of the portions 7 and 8 without having to couple additional wavy elements to the finished product, and allows strengthening the portions 7 and 8 by means of the reinforcement defined by the element 12.

Moreover, the use of a net as described above is particularly simple and inexpensive, since it allows using elements already available on the market without having to manufacture the reinforcing element 12 in a dedicated manner.

Finally, it clearly appears from the foregoing that modifications and variations may be made to the manufacturing process and to the panel 1 described above with reference to the attached figures, which do not fall out of the scope of the present invention as defined in the following claims.

In particular, the mesh element could be defined by a fabric element with holes or passages and with the ability to stiffen the sheet 2 enough to perform an anti-fall safety function.

Furthermore, the polymer material of the panel 1 could be opaque, instead of being transparent or opal: in this case, it would have no light passage function.

## Claims

1. Manufacturing process for manufacturing a reinforced panel (1); the process comprising:
- advancing a substantially flat reinforcing element (102) along a longitudinal direction (106);
- extruding at least a layer of polymer material (110) on said reinforcing element (102) during the advance along the longitudinal direction so as to embed the reinforcing element (102) in the extruded polymer material;
- shaping the polymer material and the reinforcing element (102) so as to obtain a same profile comprising at least a corrugated portion (7) or a wavy portion (8) in cross section along a section plane orthogonal to said longitudinal direction (106);
**characterized in that** the reinforcing element has a plurality of through holes (15); the polymer material, when deposited on said reinforcing element during extrusion, being still fluid so that it automatically and completely fills said holes (15).

2. Process according to claim 1, **characterized by** simultaneously shaping the extruded polymer material and the embedded reinforcing element.

3. Process according to claim 2, **characterized in that** the extruded polymer material and the embedded reinforcing element (102) form a reinforced strip (112), which advances along said longitudinal direction (106) and is cut transversely after shaping so as to obtain reinforced panels (1) of the desired length.

4. Process according to claim 3, **characterized by** calendering said reinforced strip (112) prior to shaping.

5. Process according to any one of the preceding claims, **characterized in that** the extrusion is carried out so as to completely embed said reinforcing element (102) in the polymer material.

6. Process according to claim 5, **characterized by** extruding two layers of polymer material on opposite surfaces of said reinforcing element (102).

7. Process according to any one of the preceding claims, **characterized in that** said reinforcing element is defined by a mesh element.

8. Process according to claim 7, **characterized in that** said mesh element is defined by a net comprising metal wires.

9. Process according to anyone of the previous claims, **characterized in that** the reinforcing element forms a reel, and it is progressively unwound from said reel when advancing along the longitudinal direction.

10. Process according to any one of claims 1 to 6, **characterized in that** said reinforcing element is defined by a perforated sheet.

## Patentansprüche

1. Herstellungsprozess zum Herstellen eines verstärkten Paneels (1), wobei der Prozess folgende Schritte umfasst:
- Vorschieben eines im Wesentlichen flachen Verstärkungselements (102) entlang einer Längsrichtung (106);
- Extrudieren wenigstens einer Schicht polymeren Materials (110) auf besagtem Verstärkungselement (102), während des Vorschubs entlang der Längsrichtung, um das Verstärkungselement (102) in das extrudierte polymere Material einzubetten;
- Formen des polymeren Materials und des Verstärkungselements (102) derart, dass sie ein gleiches Profil erhalten, das im Querschnitt wenigstens einen geriffelten Abschnitt (7) oder einen gewellten Abschnitt (8) entlang einer zu der Längsrichtung (106) senkrechten Bereichsebene aufweist,
**dadurch gekennzeichnet, dass** das Verstärkungselement eine Vielzahl von Durchgangslöchern (15) aufweist, wobei das polymere Material, wenn es auf besagtem Verstärkungselement während der Extrusion aufgebracht wird, noch flüssig ist, sodass es automatisch und vollständig besagte Löcher (15) ausfüllt.

2. Prozess gemäß Anspruch 1, **gekennzeichnet durch** zeitgleiches Formen des extrudierten polymeren Materials und des eingebetteten Verstärkungselements.

3. Prozess gemäß Anspruch 2, **dadurch gekennzeichnet, dass** das extrudierte polymere Material und das eingebettete Verstärkungselement (102) einen verstärkten Streifen (112) bilden, welcher sich entlang besagter Längsrichtung (106) vorwärtsbewegt und nach dem Formen transversal geschnitten wird, um verstärkte Paneele (1) der gewünschten Länge zu erhalten.

4. Prozess gemäß Anspruch 3, **gekennzeichnet durch** Kalandrieren besagten verstärkten Streifens (112) vor dem Formen.

5. Prozess gemäß einem der vorherigen Ansprüche, **dadurch gekennzeichnet, dass** die Extrusion derart ausgeführt wird, dass besagtes Verstärkungselement (102) vollständig in dem polymeren Material eingebettet wird.

6. Prozess gemäß Anspruch 5, **gekennzeichnet durch** Extrudieren zweier Schichten polymeren Materials auf gegenüberliegenden Oberflächen besagten Verstärkungselements (102).

7. Prozess gemäß einem der vorherigen Ansprüche, **dadurch gekennzeichnet, dass** besagtes Verstärkungselement durch ein Netzelement definiert ist.

8. Prozess gemäß Anspruch 7, **dadurch gekennzeichnet, dass** besagtes Netzelement durch ein Netz definiert ist, das Metalldrähte umfasst.

9. Prozess gemäß einem der vorherigen Ansprüche, **dadurch gekennzeichnet, dass** das Verstärkungselement eine Rolle bildet und es fortschreitend von besagter Rolle abgewickelt wird, wenn es sich entlang der Längsrichtung vorwärtsbewegt.

10. Prozess gemäß einem der Ansprüche 1 bis 6, **dadurch gekennzeichnet, dass** besagtes Verstärkungselement durch eine perforierte Bahn definiert ist.

## Revendications

1. Procédé de fabrication pour fabriquer un panneau renforcé (1) ; le procédé comprenant :
- l'avancement d'un élément de renforcement sensiblement plat (102) le long d'une direction longitudinale (106) ;
- l'extrusion d'au moins une couche de matériau polymère (110) sur ledit élément de renforcement (102) durant l'avancement le long de la direction longitudinale de manière à incorporer l'élément de renforcement (102) dans le matériau polymère extrudé ;
- le façonnage du matériau polymère et de l'élément de renforcement (102) de manière à obtenir un même profil comprenant au moins une partie gaufrée (7) ou une partie ondulée (8) en coupe transversale le long d'un plan de section orthogonal à ladite direction longitudinale (106) ;
**caractérisé en ce que** l'élément de renforcement présente une pluralité de trous traversants (15) ; le matériau polymère, lorsqu'il est déposé sur ledit élément de renforcement durant l'extrusion, étant toujours fluide si bien qu'il remplit automatiquement et complètement lesdits trous (15).

2. Procédé selon la revendication 1, **caractérisé par** le façonnage simultané du matériau polymère extrudé et de l'élément de renforcement incorporé.

3. Procédé selon la revendication 2, **caractérisé en ce que** le matériau polymère extrudé et l'élément de renforcement incorporé (102) forment une bande renforcée (112), qui avance le long de ladite direction longitudinale (106) et est découpée transversalement après façonnage de manière à obtenir des panneaux renforcés (1) de la longueur souhaitée.

4. Procédé selon la revendication 3, **caractérisé par** le calandrage de ladite bande renforcée (112) avant façonnage.

5. Procédé selon l'une quelconque des revendications précédentes, **caractérisé en ce que** l'extrusion est réalisée de manière à incorporer complètement ledit élément de renforcement (102) dans le matériau polymère.

6. Procédé selon la revendication 5, **caractérisé par** l'extrusion de deux couches de matériau polymère sur des surfaces opposées dudit élément de renforcement (102).

7. Procédé selon l'une quelconque des revendications précédentes, **caractérisé en ce que** ledit élément de renforcement est défini par un élément à mailles.

8. Procédé selon la revendication 7, **caractérisé en ce que** ledit élément à mailles est défini par un filet comprenant des fils métalliques.

9. Procédé selon l'une quelconque des revendications précédentes, **caractérisé en ce que** l'élément de renforcement forme une bobine, et il est progressivement déroulé de ladite bobine lorsqu'il avance le long de la direction longitudinale.

10. Procédé selon l'une quelconque des revendications 1 à 6, **caractérisé en ce que** ledit élément de renforcement est défini par une feuille perforée.
